# NEUE EUROPÄISCHE PATENTSCHRIFT

(11) **EP 3 153 348 B2**
(45) Veröffentlichungstag und Bekanntmachung des Hinweises auf die Entscheidung über den Einspruch: **27.12.2023**
(45) Hinweis auf die Patenterteilung: 01.07.2020
(21) Anmeldenummer: 16192423.8
(22) Anmeldetag: 05.10.2016
(51) Int. Cl.: B60P 1/00, B60P 1/64

(54) **LASTENTRANSPORTFAHRZEUG MIT ÜBERWACHUNGSMITTELN ZUR GESICHERTEN HANDHABUNG EINES WECHSELBEHÄLTERS**
LOAD TRANSPORT VEHICLE WITH MONITORING MEANS FOR SECURE HANDLING OF A SWAPPABLE CONTAINER
CAMION AVEC MOYENS DE SURVEILLANCE POUR LA SÉCURISATION DE LA MANIPULATION D'UN CONTENEUR INTERCHANGEABLE

(30) Priorität: 05.10.2015 DE 102015219179
(43) Veröffentlichungstag der Anmeldung: 12.04.2017
(73) Patentinhaber: Franz Xaver Meiller Fahrzeug- und Maschinenfabrik - GmbH & Co KG, 80997 München (DE)
(72) Erfinder: STÜHLER, Horst, 80939 München (DE); DREXLER, Hubert, 82347 Bernried (DE)
(74) Vertreter: Weickmann & Weickmann PartmbB

(56) Entgegenhaltungen:
- EP-A2- 2 003 018
- EP-A2- 3 235 773
- WO-A2-2013/000538
- DE-A1-102006 057 610
- DE-A1-102008 028 434
- DE-A1-102008 028 434
- DE-A1-102008 060 767
- DE-A1-102012 006 536
- DE-A1-102012 200 066
- DE-A1-102012 200 066
- DE-A1-102013 016 398
- DE-A1-102014 014 248
- JP-A- 2014 113 845
- JP-A- 2014 116 963
- JP-B2- 5 064 976
- KR-B1- 100 840 358
- US-A1- 2007 059 135
- US-A1- 2015 203 034
- US-B1- 6 655 897

## Beschreibung

Die Erfindung betrifft ein Lastentransportfahrzeug mit Wechselvorrichtung zum Wechseln, Auf-, Ab- und/oder Entladen eines Wechselbehälters über das Heck des Lastentransportfahrzeugs. Solche Lastentransportfahrzeuge sind insbesondere Absetzkipper und Abrollkipper.

Bei solchen Lastentransportfahrzeugen mit Wechselvorrichtung ist der Wechselbehälter im allgemeinen bereits für sich äußerst schwer und sein Gewicht kann im beladenen Zustand oft mehr als 10 Tonnen betragen. Entsprechend besteht prinzipiell eine erhebliche Gefahr beim Betrieb der Wechselvorrichtung, insbesondere beim Abladen des Wechselbehälters, Gegenstände, Gebäude oder gar Personen zu schädigen. Deshalb ist es aus Sicherheitsgründen vorgeschrieben, dass der Benutzer eines solchen Lastentransportfahrzeugs die Wechselvorrichtung nur betätigen darf, wenn er den gesamten durch den Wechselvorgang betroffenen Bereich während einer Betätigung der Wechselvorrichtung im Blickfeld hat.

Damit kann der Benutzer insbesondere während der Betätigung der Wechselvorrichtung nicht im Fahrerhaus des Lastentransportfahrzeugs bleiben. Dies führt zu einem erheblichen Zeitverlust durch das Aussteigen und Einnehmen einer entsprechenden Position.

Dieser Zeitverlust verstärkt sich insbesondere, wenn die Verhältnisse entsprechend beengt sind und das Lastentransportfahrzeug somit in die richtige Position rangiert werden muss, um den Wechselbehälter an der richtigen Stelle abzuladen und/oder von der richtigen Stelle aufzuladen. Dies führt dazu, dass der Fahrer erst aussteigen muss, um zu sehen ob das Lastentransportfahrzeug richtig positioniert ist, und gegebenenfalls wieder einsteigen muss, um es entsprechend zu verfahren, wobei der Vorgang unter Umständen mehrfache Wiederholung erfordert.

Aus dem Bereich der Lastentransportfahrzeuge mit Ladebordwand sind Systeme bekannt, die ein Überwachen des Schwenkbereichs der Ladebordwand aus dem Fahrerhaus heraus ermöglichen. So zeigen die DE 10 2008 060 767 A1 und die DE 10 2008 028 434 A1 Fahrzeuge mit Ladebordwand bei denen eine Kamera so angeordnet ist, dass sie den Nahbereich um den Bewegungsraum einer Ladebordwand herum überwacht und das Signal an einen Bildschirm im Fahrerhaus überträgt.

Diese Systeme erlauben zwar eine Bedienung einer Ladebordwand aus dem Fahrerhaus heraus, sind aber für Lastentransportfahrzeuge mit entsprechend schweren Wechselbehältern ungeeignet, denn aufgrund der Gefahren eines unsachgemäßen Absetzen eines solchen Wechselbehälters ist eine Darstellung allein des Nahbereichs hinter dem Lastentransportfahrzeug aus Sicherheitsgründen unzureichend, um einen Abladevorgang zuverlässig zu kontrollieren.

Dies ergibt sich einerseits dadurch, dass Wechselbehälter durch entsprechende Wechselvorrichtungen mit erheblichen Abstand zum Lastentransportfahrzeug abgesetzt werden können, womit es für ein Benutzer erheblich schwerer wäre, anhand des Kamerabildes korrekt abzuschätzen, ob ein gefahrloses Absetzen möglich ist oder ob sich Hindernisse im Gefahrenbereich befinden. Andererseits lassen sich die Wechselbehälter mithilfe von Wechselvorrichtungen im Gegensatz zu einer Ladebordwand, die nur in einer bestimmten Weise herunter geklappt werden kann, auf verschiedene Arten Abladen. Beispielsweise können entsprechende Ausleger, die den Wechselbehälter bewegen, teleskopisch und/oder gelenkig ausgebildet sein, wodurch sich erheblich mehr Freiheitsgrade beim Abladen des Wechselbehälters als bei einem Absenken einer Ladebordwand ergeben.

In Kombination mit dem erheblichen Gewicht eines Wechselbehälters, welches bei unsachgemäßer Handhabung unmittelbar eine erhebliche Gefahr darstellen kann, sind die aus dem Bereich der Ladebordwände bekannten Lösungen für einen sicheren Betrieb von Lastentransportfahrzeugen mit Wechselvorrichtungen und entsprechenden Wechselbehältern unzureichend.

Aus der US 2007/0059135 A1 die den nächstliegenden Stand der Technik darstellt, ist ein Fahrzeug mit einer rückseitigen Hebevorrichtung entsprechend einem Gabelstapler bekannt, bei dem der Fahrer durch eine Kamera und einen Bildschirm das Anheben und Absenken einer auf den Gabelzinken getragenen Last überwachen kann. Somit ist ein Gegenstand entsprechend dem Oberbegriff des Anspruchs 1 bzw. 12 offenbart. Des Weiteren offenbart die DE 10 2006 057610 A1 einen dem Oberbegriff des Anspruchs 1 bzw. 12 ähnlichen Gegenstand.

Aus der US 6 655 897 B1 ist eine rollbare Vorrichtung zum Transport von Küken bekannt, deren Ein- und Ausladen aus einem zugehörigen Transportfahrzeug mit rückwärtigen Kameras und einem Bildschirm im Sichtfeld des Fahrers überwacht werden kann.

Ebenfalls aus dem Bereich der Ladebordwände zeigt die DE 10 2014 014 248 A1 ein Verfahren und ein System zur Positionierung eines Fahrzeugs, so dass dieses in Bezug auf eine Be- und Entladungsfläche korrekt positioniert ist, damit die Ladebordwand entsprechend auf der Be- und Entladungsfläche aufliegt und somit den Bereich zwischen Laderaum des Fahrzeugs und der Be- und Entladungsfläche überbrückt. Dafür wird die Be- und Entladungsfläche erfasst und fortlaufend der Abstand zwischen ihr und dem Fahrzeug auf einem Display im Fahrerhaus angezeigt, so dass der Fahrer erkennen kann, wenn das Fahrzeug in einem geeigneten Abstand von der Be- und Entladungsfläche ist.

Ein solches Verfahren ist allerdings für Lastentransportfahrzeuge mit einer Wechselvorrichtung und einem Wechselbehälter unzureichend, denn diese werden oft in schwierigem Gelände eingesetzt, so dass die Angabe einer Abstandsinformation oft gar nicht möglich ist, da eine Vielzahl von Objekten bei der Wahl eines Abladeortes und der Steuerung des Abladevorgangs berücksichtigt werden müssen. Damit genügen, insbesondere in Anbetracht der erheblich größeren Gefahren, reine Abstandsinformationen nicht, um eine entsprechende Sicherheit zu gewährleisten. Ferner kann vor allem im Bereich von Erdarbeiten sogar der Abstand zu bestimmten Objekten irrelevant sein, da beispielsweise ein Wechselbehälter problemlos auf kleineren Erdhügel abgesetzt werden kann, da er sie durch sein Gewicht ausreichend glättet, damit er eben und stabil steht. In diesem Fall könnten Abstandsinformationen zur Verwirrung beitragen und den Abladevorgang unsicherer machen.

Der Erfindung liegt somit die Aufgabe zu Grunde, ein Lastentransportfahrzeug mit Wechselvorrichtung anzugeben, bei dem ein ausreichend sicheres Wechseln, Auf-, Ab- und/oder Entladen eines Wechselbehälters unter Kontrolle aus dem Fahrerhaus ermöglicht ist.

Zur Lösung der Aufgabe wird ein Lastentransportfahrzeug gemäß des Gegenstands des Anspruchs 1 vorgeschlagen.

Dadurch, dass die Kontrolleinrichtung dazu eingerichtet ist, Informationen eines Wechsel-, Auflade, Ablade- und/oder Entladevorgangs mit den Raumerfassungsinformationen zu kombinieren und die Bilderzeugungsvorrichtung diese dann als Bildinformationen darstellen kann, kann der Benutzer aus dem Fahrerhaus heraus oder von jeder anderen Position, von der die Bilderzeugungsvorrichtung einsehbar ist, ausreichend präzise beurteilen, ob der entsprechende Vorgang in gewünschter Weise ausgeführt werden kann.

Hierbei ist unter einem Abladevorgang das Abladen des Wechselbehälters als ganzes zu verstehen, also das Abrollen im Falle eines Abrollkippers und das Absetzen im Falle eines Absetzkippers. Entsprechend ist mit einem Aufladevorgang das Aufladen eines Wechselbehälters auf das Lastentransportfahrzeug zu verstehen. Unter einem Entladevorgang ist hingegen das Entleeren der transportierten Ladung aus dem Wechselbehälter zu verstehen, also insbesondere das Kippen des Wechselbehälters, so dass die Ladung aus dem Wechselbehälter herausrutscht. Ein Wechselvorgang beinhaltet einen Abladevorgang und einen Aufladevorgang, so dass ein aktueller Wechselbehälter auf einem Lastentransportfahrzeug durch einen anderen ersetzt wird.

Ferner können die Informationen eines Wechsel-, Auflade-, Ablade-und/oder Entladevorgangs eines Wechselbehälters sowohl Informationen eines bereits initiierten Vorgangs als auch Informationen von möglichen Vorgängen sein, die auswählbar sind oder auch automatisch angezeigt werden. Beispielsweise kann die Kontrolleinrichtung so ausgelegt sein, dass auf bestimmte Betriebsvorgänge des Lastentransportfahrzeugs hin bestimmte Informationen angezeigt werden, beispielsweise auf ein Abschalten des Motors und Ausfahren von Seitenstützen automatische Anzeige von Informationen über einen Abladevorgang des Wechselbehälters.

Erfindungsgemäß wird entsprechend eine Abladeposition des Wechselbehälters mit einer virtuellen Markierung in dem Bild der Bilderzeugungsvorrichtung angezeigt, womit der Benutzer unmittelbar aus den Bildinformationen erkennen kann, ob es beim Abladen an dieser Position zur Kollision mit Störkomponenten und zu einer Beschädigung von Objekten und/oder Personen kommen kann. Entsprechend kann er einen Abladevorgang unterbinden oder unmittelbar den Vorgang unterbrechen und gegebenenfalls das Fahrzeug zunächst anders positionieren, so dass ein sichereres Abladen in einem sicheren Abladebereich möglich ist.

In gleicher Weise ermöglicht die erfindungsgemäße Vorrichtung ein sicheres Auf- und/oder Entladen eines Wechselbehälters sicher, denn entsprechend kann in den Bildinformationen dargestellt werden, ob die Ausleger den Wechselbehälters erreichen bzw. in welchem Bereich das aus dem Wechselbehälter entladene Gut vermutlich landen wird.

Dadurch wird insbesondere auch ein wiederholtes Aussteigen und Einsteigen im Rahmen des Auf- bzw. Abladens eines Wechselbehälters vermieden, denn anhand der Bildinformationen kann der Benutzer aus dem Fahrerhaus unmittelbar erkennen, ob das Fahrzeug bereits richtig positioniert ist und entsprechend unmittelbar das Fahrzeug manövrieren, bis es richtig positioniert ist.

Ferner wird das Problem der verschiedenen Freiheitsgrade gelöst, da bei Betätigen des Abladevorgangs, der bevorzugt ebenfalls durch die Kontrolleinrichtung gesteuert oder zumindest überwacht wird, unmittelbar in Abhängigkeit von der Betätigung, also beispielsweise von dem Teleskopieren der Ausleger, eine entsprechende Verschiebung der Abladeposition darstellbar ist. Damit erhält der Benutzer unmittelbar während des Betriebs des Wechselvorgangs und während er im Fahrerhaus ist Rückmeldung darüber, wie sich aufgrund seiner Bedienungsbefehle die Abladeposition ändert.

Insbesondere kann auch gleichzeitig die aufgrund der momentanen Einstellung der Freiheitsgrade zu erwartende Absetzposition sowie der gesamte aufgrund der möglichen Variation der Freiheitsgrade mögliche Bereich an Absetzpositionen dargestellt werden. Dies kann beispielsweise durch verschiedenen farbige virtuelle Markierungen realisiert sein.

Ferner kann auch der Bereich durch virtuelle Markierungen kenntlich gemacht werden, den der Wechselbehälter oder die Mittel der Wechselvorrichtung im Rahmen eines Vorgangs überstreichen bzw. passieren. Dies ist insbesondere für Absetzkipper vorteilhaft, denn deren Ausleger stehen seitlich und nach oben etwas über den Wechselbehälter über. Hierfür ist die Markierung des Bewegungsbereichs der Ausleger somit hilfreich, um Beschädigungen durch die Ausleger selbst vorzubeugen.

Dadurch ist ein sicherer Betrieb, also Wechsel-, Auf-, Ab- und/oder Entladevorgang der Wechselvorrichtung des Lastentransportfahrzeugs unter Kontrolle des Benutzers aus dem Fahrerhaus heraus möglich. Insbesondere ist auch das Wechseln von Wechselbehältern, also das Abladen eines transportierten Wechselbehälters und Aufladen eines vor Ort befindlichen Wechselbehälters, besonders erleichtert.

Vorzugsweise umfasst die Raumerfassungssensoranordnung als Sensorelement mindestens eine Kamera. Dies ist vorteilhaft, da die Informationen einer Kamera Bildinformationen sind, die es dem Benutzer unmittelbar erlauben zu erkennen, ob und welche Objekte im Bereich des Lastentransportfahrzeugs sind. Dabei kann er unmittelbar beurteilen, ob und wie Objekte für den beabsichtigten Vorgang relevant sind. So kann er erkennen, ob sich Personen im Gefahrenbereich befinden oder sich in Richtung des Gefahrenbereichs bewegen, so dass er dann die Wechselvorrichtung in ihrer Bewegung gegebenenfalls stoppen kann.

Bevorzugt sind die mindestens eine Kamera und/oder Sensorelemente der Raumerfassungssensoranordnung beweglich und/oder an der Wechselvorrichtung und insbesondere an oder in einem beweglichen Element der Wechselvorrichtung angebracht, so dass sich im Rahmen eines Wechsel-, Auflade, Ablade- und/oder Entladevorgangs der Blickwinkel der Kamera bzw. der Erfassungsbereich von Sensorelementen ändert bzw. ändern lässt.

Dies ist vorteilhaft, da es bei entsprechendem Betrieb einer Wechselvorrichtung, insbesondere beim Abladen eines Wechselbehälters, dazu kommen kann, dass der Wechselbehälter selbst den Bereich ganz oder teilweise verdeckt, der für die Sicherheit relevant ist, also insbesondere die Abladeposition. Da ein entsprechender Vorgang 20 bis 40 Sekunden in Anspruch nehmen kann, ist es unzureichend, wenn der Benutzer vor Beginn des Vorganges erkennen kann, dass sich kein Objekt und keine Person im Gefahrenbereich, also insbesondere an der Abladeposition befindet.

Denn in diesem Zeitrahmen könnte sich ein Objekt und insbesondere eine Person in den Gefahrenbereich bewegen, so dass bei Fortsetzung des Vorganges entsprechende Gefahren entstehen. Dies kann durch eine bewegliche und/oder an beweglichen Teilen der Wechselvorrichtung befestigte Kamera verhindert werden, da die Bewegung den durch den Wechselbehälter bedingten toten Winkel teilweise oder vollständig ausgleichen kann.

Bevorzugt ist die Bilderzeugungsvorrichtung ein Display und insbesondere ein berührungsempfindliches Display. Entsprechende Displays bzw. Bildschirme sind gut geeignet um Bildinformationen darzustellen und können insbesondere die von einer Kamera aufgenommene Szenerie präzise darstellen. Damit ist es für den Benutzer leichter entsprechend Objekte und Personen im Gefahrenbereich zu identifizieren.

Durch die Ausgestaltung als berührungsempfindliches Display ergibt sich der zusätzliche Vorteil, dass der Benutzer unmittelbar Interaktionen durchführen kann, beispielsweise einen bestimmten Bildausschnitt vergrößern, um ein Objekt besser erkennen zu können. Dies erlaubt eine sicherere Überwachung des Gefahrenbereichs.

Vorzugsweise umfasst die Bilderzeugungsvorrichtung eine Eingabevorrichtung oder ist mit einer Eingabevorrichtung signalübertragend verbunden, wobei die Kontrolleinrichtung dazu eingerichtet ist, einen Wechsel-, Auflade-, Ablade- und/oder Entladevorgang in Abhängigkeit von mit der Eingabevorrichtung getätigten Eingaben zu starten, zu stoppen und/oder zu variieren.

Dadurch kann der Benutzer unmittelbar am Display Befehle zur Steuerung der Wechselvorrichtung eingeben. Dies erlaubt eine intuitivere und schnellere Steuerung, da der Benutzer unmittelbar auf eine auf dem Bildschirm gezeigte Information direkt durch eine Betätigung in dem Bereich der gezeigten Information mit einem entsprechenden Steuerungsbefehl reagieren kann. Dadurch kann der Reaktionszeitverlust zwischen Entscheidung hinsichtlich des Steuerungsbefehls und entsprechendes Auswählen an einer separaten Steuerung vermieden oder reduziert werden, wodurch die Sicherheit erhöht wird.

Insbesondere können damit die Freiheitsgrade der Bewegung des Wechselbehälters, beispielsweise Gelenk- und/oder Teleskopfunktionen der Ausleger, erheblich flexibler vom Benutzer genutzt werden. Denn wenn der Benutzer anhand des ausgegebenen Bildes erkennt, dass die momentan berechnete Abladeposition unerwünscht ist, kann entsprechend durch Betätigung von Teleskopmechanismen in den Auslegern diese Position verändert werden, bis sie eine gewünschte Position ist.

Dabei ist ein berührungsempflindliches Display bevorzugt, denn es überlappt vollständig mit dem Ausgabebereich des Displays, so dass eine Gestensteuerung mit unmittelbarem Bezug auf die dargestellte Szenerie möglich ist. Gegebenenfalls kann dies auch dadurch erreicht werden, dass die Eingabevorrichtung zwar nicht Teil der Bilderzeugungsvorrichtung wie beispielsweise im Falle eines berührungsempfindlichen Displays ist, sondern dass die Eingabevorrichtung mit dem Ausgabebereich der Bilderzeugungsvorrichtung überlappt. Dies wäre beispielsweise auch im Falle einer berührungsempfindlichen Fläche ein wenig entfernt von dem Display gegeben und kann entsprechend wie ein berührungsempfindliches Display vorteilhaft genutzt werden. Dabei können insbesondere auch alle aus dem Bereich der Smartphones bekannten Ideen und Aspekte der Gestensteuerung genutzt werden.

Bevorzugt ist die Kontrolleinrichtung dazu eingerichtet, den Bewegungszustand des Lastentransportfahrzeugs und/oder den Betätigungszustand der Wechselvorrichtung so zu variieren, dass beim Entladen, Abladen und/oder Wechseln dies entsprechend auf eine durch Eingaben des Benutzers festgelegte Position geschieht. Dies ist besonders vorteilhaft, da beispielsweise der Benutzer auf dem berührungsempfindlichen Display eine virtuelle Markierung, die entsprechend eine Ablade- oder Entladeposition repräsentiert, einfach durch Berührung an eine auf dem Bildschirm dargestellte Stelle ziehen kann, woraufhin die Kontrolleinrichtung den Bewegungszustand des Lastentransportfahrzeugs und/oder den Betätigungszustand der Wechselvorrichtung so variiert und/oder ansteuert, dass der Wechselbehälter bzw. die Ladung des Wechselbehälters tatsächlich auf die durch die virtuelle Markierung bestimmte Position abgesetzt bzw. abgeladen wird.

Für den Fall des Abladevorgangs erlaubt dies eine besonders einfache Steuerung mit einer gleichzeitig hohen Präzision, so dass damit mit wenig Aufwand der Wechselbehälter präziser an der vom Benutzer bevorzugten Position abgesetzt werden kann. Dabei ist dies zwar für einen Entladevorgang, vor allem im Falle von Schüttgut, nicht sehr präzise, aber die Eingabe von wenigstens der Entladeposition über das berührungsempfindliche Display ist dennoch vorteilhaft, da das abgeladene Gut wenigstens ungefähr an einer gewünschten Position liegt.

Ferner und/oder alternativ kann die Kontrolleinrichtung entsprechend eingerichtet sein, einen durch Eingabe des Benutzers bestimmten Behälter anhand der Raumerfassungsinformationen und/oder Bildinformationen zu identifizieren und den Bewegungszustand des Lastentransportfahrzeugs und/oder dem Betätigungszustand der Wechselvorrichtung so zu variieren, dass das Fahrzeug passend zum Aufladen des Wechselbehälters positioniert wird und bevorzugt das Aufladen, soweit manuelle Handlung nicht erforderlich sind, automatisch ausgeführt wird.

In diesem Sinne umfasst der Bewegungszustand des Lastentransportfahrzeugs insbesondere auch den Zustand von Systemen des Lastentransportfahrzeugs, wie beispielsweise ausfahrbare Stützen, Bremsen und/oder den Antrieb des Lastentransportfahrzeugs. Der Betätigungszustand der Wechselvorrichtung umfasst hierbei insbesondere den Antrieb und/oder die Hydraulik der Wechselvorrichtung, aber auch Teleskopmechanismen und andere Freiheitsgrade.

Ferner kann die Kontrolleinrichtung dazu eingerichtet sein, auch einige oder sämtliche anderen Systeme anzusteuern und/oder zu variieren, die den Wechsel-, Ablade-, Ablage- und/oder Entladevorgang beeinflussen.

Vorzugsweise ist die Raumerfassungssensoranordnung und/oder die Kontrolleinrichtung dafür eingerichtet, physische Markierungen, Signalfarben und/oder ähnliches an Objekten und/oder Personen oder die Objekte und Personen selbst zu identifizieren. In Abhängigkeit von dieser Identifizierung, kann die Darstellung von Bildinformationen noch weiter mit Betriebsanweisungen für einen Wechsel-, Auflade-, Ablade- und/oder Entladevorgang überlagert oder modifiziert werden.

Dies ist vorteilhaft, da beispielsweise bei regelmäßig genutzten Stellorten für Wechselbehälter häufig entsprechende Markierungen, beispielsweise auf der Straße, vorhanden sind. Können diese durch die Raumerfassungssensoranordnung bzw. die Kontrolleinrichtung identifiziert werden, kann entsprechend auf dem Display unmittelbar für den Benutzer angezeigt werden, an welche Position oder in welchen Bereich das Lastentransportfahrzeugs bewegt werden muss, um entsprechend an dem markierten Ort einen Behälter abzuladen. Dies lässt sich in gleicher Weise für einen Entlade- und/oder Aufladevorgang nutzen.

Für einen Entladevorgang, kann eine entsprechend äquivalente Markierung identifiziert werden, dies könnte beispielsweise auch die Kante eines Abhangs oder die Öffnung eines Behälters sein, woraufhin entsprechend angezeigt wird, an welcher Position das Lastentransportfahrzeug idealerweise für einen Entladevorgang stehen soll. Für einen Aufladevorgang kann ein Wechselbehälter selbst oder daran befindliche Markierungen, beispielsweise an Eingriffsmitteln für die Ausleger, identifiziert werden und angezeigt werden, wie das Fahrzeug zu positionieren ist, damit der entsprechende Behälter aufgeladen werden kann.

Diese Ausgestaltung lässt sich besonders bevorzugt mit der Ausgestaltung der Kontrolleinrichtung zur Steuerung des Bewegungszustandes des Lastentransportfahrzeugs und des Betätigungszustandes der Wechselvorrichtung in der Art kombinieren, dass die Kontrolleinrichtung dazu eingerichtet ist, die Wechselvorrichtung so zu steuern, dass sie auf Eingabe des Benutzers hin automatisch bzw. bis auf zwingend notwendig manuelle Handlungen automatisch bei einem Wechselbehälterabladevorgang den Wechselbehälter an einer physisch markierten Position ablädt. Alternativ und/oder zusätzlich kann die Kontrolleinrichtung dazu eingerichtet sein, bei einem Wechselbehälteraufladevorgang den anhand der Form und/oder physischen Markierungen identifizierten Wechselbehälter automatisch aufzuladen, jedenfalls soweit keine manuellen Handlungen zwingend erforderlich sind.

Dies führt insgesamt zu einer erheblichen Erleichterung und Beschleunigung des Betriebs des Lastentransportfahrzeugs, da der Benutzer nur entsprechend eine identifizierte Markierung und/oder einen identifizierten Wechselbehälter mithilfe der Eingabevorrichtung, also insbesondere auch durch Berührung eines berührungsempfindlichen Displays auswählen und einen entsprechenden Befehl geben muss, damit die entsprechenden Vorgänge automatisch und präzise vorgenommen werden.

Bezogen auf Absetzkipper muss der Benutzer dann nur noch entsprechend die Halteketten am Wechselbehälter befestigen bzw. von diesem lösen. Hingegen können Vorgänge bei Abrollkippern, bei denen der Ausleger üblicherweise durch ein hydraulisch verschließbares Hakenelement in eine entsprechende Eingriffsvorrichtung am Wechselbehälter eingreift, vollständig automatisch erfolgen, wobei der Benutzer vom Fahrerhaus nur allgemein das richtige Funktionieren des Vorgangs überwachen muss.

Selbstverständlich können für die Raumerfassungssensoranordnung noch andere Sensoren als Kameras verwendet werden, beispielsweise Ultraschall-, Laser- und/oder Bewegungssensoren. Diese können alternativ oder zusätzlich zu Kameras vorgesehen sein und entsprechend ebenfalls Raumerfassungsinformationen und/oder Bildinformationen für die Kontrolleinrichtung bereitstellen, die entsprechend auf der Bilderzeugungsvorrichtung dargestellt werden. Diese anderen Sensoren können ebenfalls wie die Kamera beweglich ausgebildet sein.

Ferner lässt sich durch eine geeignete Kombination von Sensoren und durch eine entsprechende Auslegung der Kontrolleinrichtung das Lastentransportfahrzeug insgesamt als eigensichere Maschine auslegen, also als Maschine, bei der die Maschine selbst auch bei Fehlbedienung Unfällen vorbeugt oder sie verhindert. Beispielsweise kann durch eine Kombination von Bewegungssensoren, seitliche und heckseitige Kameras und einer entsprechenden Bilderkennungssoftware der Kontrolleinrichtung die Position und Bewegung aller Personen und insbesondere des Benutzers um das Lastentransportfahrzeug erfasst werden. Die Kontrolleinrichtung kann dann dazu eingerichtet sein, bei entsprechenden Bewegungen in Richtung und nahe des Gefahrenbereichs sofort den aktuellen Vorgang entsprechend zu beenden und/oder zu variieren, um eine Verletzung zu vermeiden. Damit ist insbesondere auch der Benutzer selbst gegen Bedienungsfehler geschützt.

Ferner können entsprechende Elemente der Raumerfassungssensoranordnung sowohl kabellos als auch über entsprechende Kabelverbindungen mit der Kontrolleinrichtung verbunden sein. Gleiches gilt für die Verbindung der Kontrolleinrichtung mit der Bilderzeugungsvorrichtung, sowie eventuelle Verbindungen der Bilderzeugungsvorrichtung mit der Raumerfassungssensoranordnung und für eventuelle Verbindungen der Kontrolleinrichtung und/oder der Bilderzeugungsvorrichtung mit Systemen des Lastentransportfahrzeugs und/oder der Wechselvorrichtung.

Ferner kann, soweit Auf- und Abladevorgang vollständig automatisiert und ohne notwendige manuelle Handlungen ausführbar sind, die Kontrolleinrichtung dazu eingerichtet sein, den Austausch mehrerer Wechselbehälter, als insbesondere einen Ablade- und einen anschließenden Aufladevorgang vollständig automatisch auszuführen.

Ferner können auch weitere Raumerfassungssensoranordnungen vorgesehen sein, die auch andere Bereiche bezogen auf das Lastentransportfahrzeugs erfassen, wobei solche Informationen auch auf zusätzlichen Bilderzeugungsvorrichtungen dargestellt werden können. Dies kann vorteilhaft sein, damit entsprechende Behälter und/oder physische Markierungen auch neben und vordem Lastentransportfahrzeug identifiziert werden und entsprechende Hinweise für den Benutzer angezeigt werden und/oder der Benutzer entsprechend Befehle bezüglich dieser identifizierten Objekte angeben kann.

Ferner kann die Kontrolleinrichtung auch dazu eingerichtet sein, entsprechend physische Warnmarkierungen, Warnsignalfarben und/oder ähnliches und insbesondere Objekte und insbesondere Personen zu identifizieren und entsprechende Hinweise, insbesondere Warnhinweise auf der Bilderzeugungsvorrichtung anzuzeigen. Dies erlaubt es, neben dem offensichtlichen Vorteil des zusätzlichen Schutzes für Personen, in entsprechend schwierigen Bereichen gezielt physische Markierungen anzubringen, die auf leicht übersehbare Hindernisse hinweisen.

Beispielsweise können niedrige aber für das Abladen eines Wechselbehälters problematische stationäre Objekte in einem Arbeitsbereich durch entsprechende Warnsignalfarben markiert werden, wodurch die Sicherheit deutliche erhöht ist. Insbesondere kann die Kontrolleinrichtung dazu eingerichtet sein, bei Identifizierung einer entsprechenden Warnmarkierung an einer für den aktuellen Vorgang kritischen Stelle, den aktuellen Vorgang sofort zu stoppen. Ferner können zusätzliche Mittel, wie beispielsweise Lautsprecher oder Warnlampen, vorgesehen sein vorgesehen sein, um auf alternative Arten einen Warnhinweis auszugeben.

Ferner kann die Kontrolleinrichtung dazu eingerichtet sein, Warnwesten und/oder Schutzhelme zu erkennen und bei Identifizierung einer Warnweste bzw. eines Schutzhelmes entsprechend durch einen besonderen Hinweis bzw. eine besondere virtuelle Markierung auf die Position der Wamweste/des Schutzhelms und damit auf die Position einer Person hinzuweisen.

Selbstverständlich kann die Kontrolleinrichtung dazu eingerichtet sein, bereits verwendete Markierungen wie z.b. Fahrbahnmarkierungen oder Markierungen auf Baustellen als Markierung bzw. Wammarkierung zu identifizieren und in oben beschriebener Weise zu nutzen.

Ferner kann die Kontrolleinrichtung dazu eingerichtet sein, dass bei Identifizierung von Markierungen und/oder Wammarkierungen unmittelbar auch den identifizierten Markierungen entsprechende Informationen mit den Raumerfassungsinformationen zur Darstellung der Bildinformationen zu kombinieren. Beispielsweise indem bei Identifizierung einer Markierung einer Abladeposition unmittelbar die für das Lastentransportfahrzeug erforderliche Position angezeigt wird und/oder Anweisungen, wie das Lastentransportfahrzeug zu rangieren ist, damit es diese Position erreicht.

Ferner kann die Kontrolleinrichtung auch dazu eingerichtet sein, über entsprechend gesicherte Verbindungen bzw. bei entsprechender elektronischer Zugangsberechtigung mit einem mobilen Endgerät mit Bilderzeugungsvorrichtung, beispielsweise einer Fernsteuerung der Wechselvorrichtung bzw. einem Smartphone, zu kommunizieren, so dass sämtliche oben auf die Bilderzeugungsvorrichtung bezogenen Merkmale durch Zusammenwirken mit dem mobilen Endgerät realisiert sind. So kann beispielsweise der Bildschirm eines Smartphones in gleicherweise wie die Bilderzeugungsvorrichtung genutzt werden, entweder zusätzlich oder alternativ.

Ferner kann auch die Bilderzeugungsvorrichtung selbst als mobiles Endgerät ausgebildet sein, beispielsweise indem die Kommunikation mit der Kontrolleinrichtung über Funkverbindung erfolgt, die Bilderzeugungsvorrichtung lösbar in dem Fahrerhaus angeordnet werden kann und über einen Akku verfügt.

Die Erfindung betrifft ebenfalls eine Wechselvorrichtung mit den Merkmalen des Anspruchs 12.

Die Erfindung betrifft ferner ein Verfahren zur Erleichterung des Betriebs eines Lastentransportfahrzeugs mit Wechselvorrichtung bzw. einer Wechselvorrichtung, wobei das Verfahren die Schritte gemäß den Merkmalen des Anspruchs 14 umfasst.

Gemäß einer bevorzugten Ausführungsform der Erfindung kommt 3-D-Bildtechnik zum Einsatz, so dass der Benutzer einen räumlichen Bildeindruck erhalten kann. Stereobildaufzeichnungssysteme und Darstellungssysteme sind aus der Fernsehtechnik bekannt. Diese zum Teil nach verschiedenen Prinzipien funktionierenden Systeme können für die Realisierung der vorliegenden Erfindung hinsichtlich sowohl des erfindungsgemäßen Lastentransportfahrzeugs, der erfindungsgemäßen Wechselvorrichtung als auch des erfindungsgemäßen Verfahrens adaptiert werden. Zur Bilddarstellung kommen in diesem Sinne auch Stereobrillen, sogenannte head mounted glasses und smart glasses in Frage.

Ein Ausführungsbeispiel der Erfindung wird nachfolgend unter Bezugnahme auf die Zeichnungen näher erläutert.
- Fig. 1: zeigt ein erfindungsgemäßes Lastentransportfahrzeug mit einem von der Wechselvorrichtung gehalterten Wechselbehälter.
- Fig. 2: zeigt das Ausführungsbeispiel aus Fig. 1 beim Abladen des Wechselbehälters.
- Fig. 3: zeigt in stark vereinfachter schematischer Darstellung eine perspektivische Ansicht einer Abladesituation eines erfindungsgemäßen Lastentransportfahrzeugs, wobei ein sicheres Abladen nicht möglich ist.
- Fig. 4: zeigt in stark vereinfachter schematischer Darstellung eine perspektivische Ansicht einer Abladesituation eines erfindungsgemäßen Lastentransportfahrzeugs, wobei ein sicheres Abladen möglich ist.
- Fig. 5: zeigt ein Displaybild des Lastentransportfahrzeugs aus Fig. 3.
- Fig. 6: zeigt ein Displaybild des Lastentransportfahrzeugs aus Fig. 4.

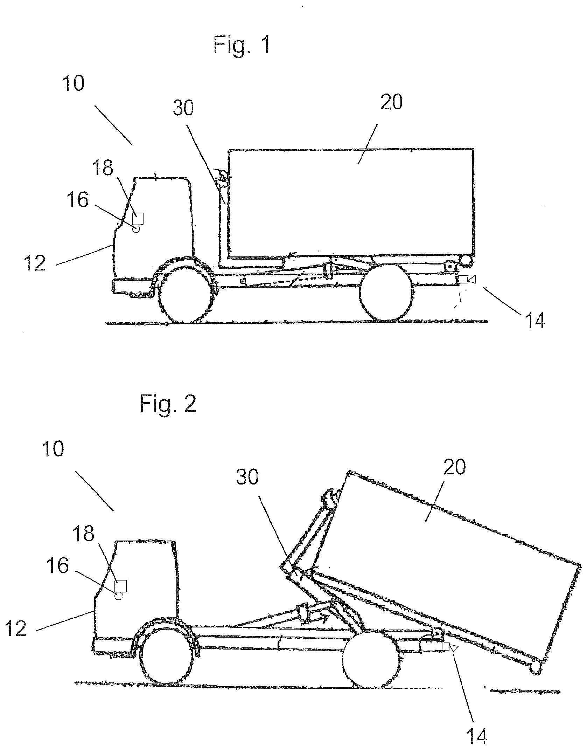

Wie in den Fig. 1 und 2 gezeigt, umfasst ein erfindungsgemäßes Lastentransportfahrzeug 10 im Fall der gezeigten Ausführung als Abrollkipper ein Fahrerhaus 12 und eine Wechselvorrichtung 30. Durch die Wechselvorrichtung 30 wird ein Wechselbehälter 20 gehaltert. Wie in Fig. 2 gezeigt, kann der Wechselbehälter 20 mithilfe der Wechselvorrichtung 30 in einen Bereich hinter dem Lastentransportfahrzeug 10 abgeladen werden. Dies ist somit ein Gefahrenbereich, denn Objekte und Personen in diesem Bereich könnten erheblich durch das Abladen geschädigt werden.

Das Lastentransportfahrzeug 10 umfasst eine heckseitige Kamera 14 als Raumerfassungssensoranordnung, die auf einen Bereich heckseitig des Lastentransportfahrzeugs 10 ausgerichtet ist und insbesondere den Gefahrenbereich erfasst. Die Kamera 14 überträgt über Funkverbindung die aufgenommenen Raumerfassungsinformationen, hier also Bilder, an eine Kontrolleinrichtung 16, die im Fahrerhaus 12 angeordnet ist. Die Kontrolleinrichtung 16 kombiniert diese Bilder mit Informationen eines Abladevorgangs zu Bildinformationen, die mit einem Display 18 im Fahrerhaus 12 dargestellt werden. Damit kann der Benutzer aus dem Fahrerhaus erkennen, ob und welche Hindernisse es heckseitig gibt und ob diese in oder nahe dem Gefahrenbereich sind. Damit kann er unter Wahrung einer ausreichenden Betriebssicherheit vom Fahrerhaus 12 aus den Abladevorgang in Fig. 2 steu - ern und muss nicht aussteigen um selbst den Bereich hinter dem Lastentransportfahrzeug 10 zu beobachten.

Wie in Fig. 2 ferner angedeutet ist, dreht sich die Kamera 14 während des Abladevorgangs, so dass sie noch so viel wie möglich erfasst, auch wenn der Wechselbehälter 20 bereits teilweise den Überwachungsbereich der Ka - mera 14 blockiert. Hierbei ist anzumerken, dass die Kamera 14 auch an teleskopischen Elementen angeordnet sein kann und dann während des Abladens so bewegt werden kann, dass der durch den Wechselbehälter 20 selbst bedingte tote Winkel klein gehalten wird.

Die Position der Kamera wird bei Lastentransportfahrzeugen anderen Typs entsprechend in Abhängigkeit von deren Betriebsvorgängen anders platziert, um entsprechend einen optimalen Überwachungsbereich zu bieten. Beispielsweise könnten bei einem Absetzkipper zusätzlich Kameras an den beiden Auslegern angebracht werden, die sich über die Höhe des Wechselbehälters hinaus erstrecken, so dass die zusätzlichen Kameras den Überwachungsbereich der Kamera am Heck durch ein Blickfeld oberhalb des Wechselbehälters ergänzen.

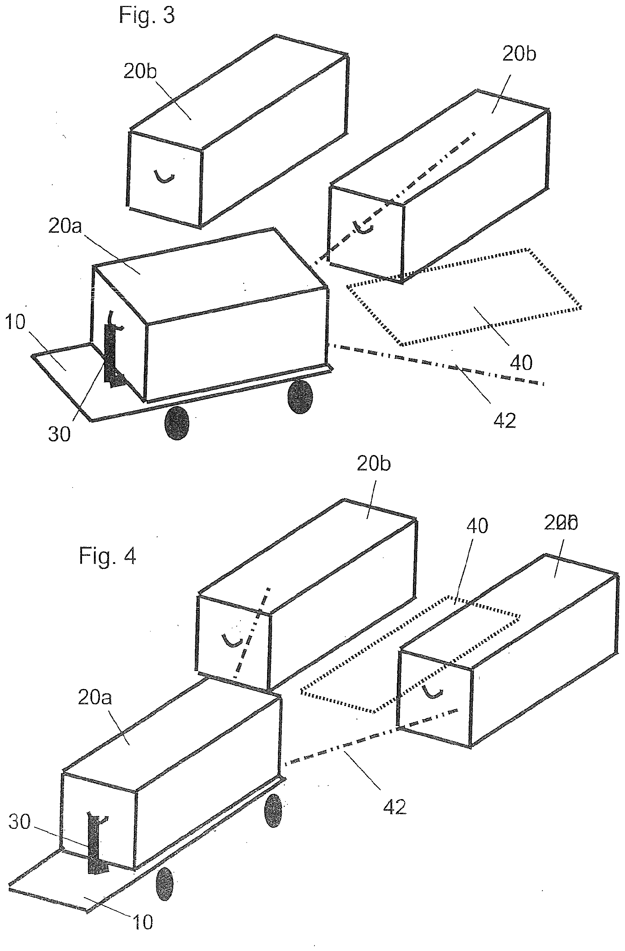

In Fig. 3 und 4 ist ein erfindungsgemäßes Lastentransportfahrzeug 10 in der Ausführung Abrollkipper in schematischer Darstellung zu sehen, allerdings ohne Darstellung des Fahrerhauses 12. Der durch die Linien mit Strichen und Punkten begrenzte Kamerabereich 42 ist dabei der von der Kamera 14 erfasste und bildet einen Teil der Informationen, die auf dem Display 18 dargestellt werden. Wie ersichtlich soll der Wechselbehälter 20a auf dem Las - tentransportfahrzeug 10 zwischen den Wechselbehältern 20b platziert werden.

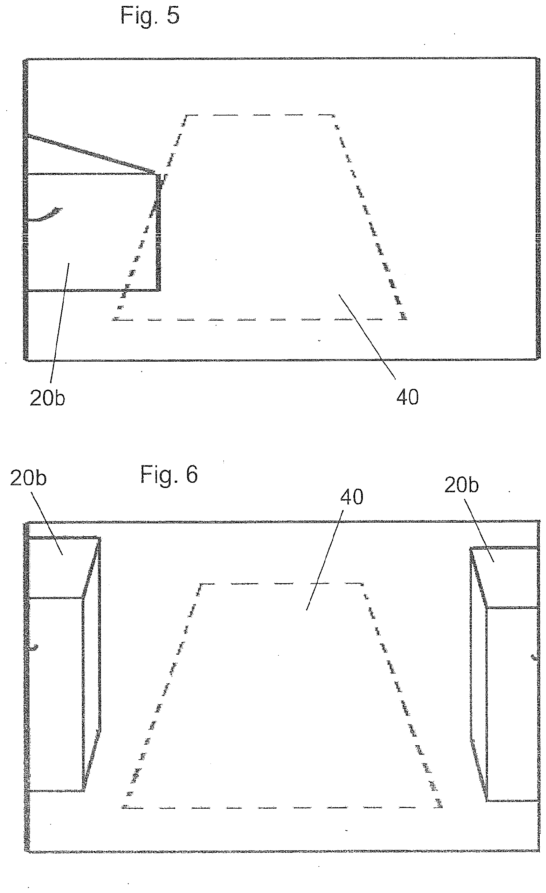

Dies wird erfindungsgemäß erleichtert, indem die Kontrolleinrichtung 16, bei - spielsweise auf eine entsprechende Befehlseingabe hin, die zu erwartende Abladeposition berechnet und anschließend in Form einer virtuellen Markie - rung 40 zusammen mit den Bildern der Kamera 14 auf dem Display 18 darstellt. In Fig. 5 ist das der Situation in Fig. 3 entsprechende Displaybild ge - zeigt und in Fig. 6 ist das der Situation in Fig. 4 entsprechende Displaybild gezeigt.

Dadurch erkennt der Benutzer in der Situation der Fig. 3 anhand des auf dem Display 18 dargestellten Bildes der Fig. 5 unmittelbar, dass das Lastentransportfahrzeug 10 noch in keiner geeigneten Position zum Abladen ist. Denn, wie an Fig. 5 ersichtlich ist, zeigt das Display 18, dass sich die virtuel - le Markierung 40 mit einem der Behälter 20b überschneidet. Damit sieht der Benutzer sofort, dass bei einem Abladen aus der aktuellen Fahrzeugposition heraus eine Kollision mit dem am Boden stehenden rechten Wechselbehälter 20b wahrscheinlich ist.

Somit kann er ohne auszusteigen und die Situation selbst in Augenschein zu nehmen das Lastentransportfahrzeug 10 solange rangieren, bis er die Situation der Fig. 4 erreicht. Dann erkennt er anhand des auf dem Display 18 dargestellten Bildes der Fig. 6 unmittelbar, dass ein Abladen nun möglich ist. Denn, wie an Fig. 6 ersichtlich ist, überschneidet sich die virtuelle Markie - rung 40 nicht mit dem Wechselbehälter 20b. Somit ist für den Benutzer unmittelbar erkennbar bei aktueller Position des Lastentransportfahrzeugs eine Durchführung eines Abladevorgangs ohne Beschädigung der anderen Wechselbehälter 20b möglich.

Vorteilhaft ist vor allem, dass der Benutzer unmittelbar während des Rangierens erkennen kann, ob das Lastentransportfahrzeug bereits an einer geeigneten Position zum Abladen des Wechselbehälters 20a ist.

Damit ist insgesamt eine erhebliche Effizienzsteigerung unter Wahrung der Sicherheit durch die erfindungsgemäßen Merkmale realisiert.

## Patentansprüche

1. Lastentransportfahrzeug mit Wechselvorrichtung zum Wechseln, Auf-, Ab- und/oder Entladen eines Wechselbehälters über das Heck des Lastentransportfahrzeugs, wobei das Lastentransportfahrzeug mindestens eine Raumerfassungssensoranordnung, die mindestens auf einen Bereich heckseitig des Lastentransportfahrzeugs ausgerichtet ist, mindestens eine Bilderzeugungsvorrichtung, bevorzugt ein Display, zur Ausgabe von Bildinformationen, Ausleger und eine Kontrolleinrichtung umfasst, **dadurch gekennzeichnet, dass** die Kontrolleinrichtung dazu eingerichtet ist, von der Raumerfassungssensoranordnung übertragene Raumerfassungsinformationen mit Informationen eines Wechsel-, Auflade-, Ablade- und/oder Entladevorgangs eines Wechselbehälters zur Darstellung von Bildinformationen mittels der Bilderzeugungsvorrichtung zu kombinieren, wobei die Kontrolleinrichtung ferner dazu eingerichtet ist in den Bildinformationen,
eine Abladeposition des Wechselbehälters als virtuelle Markierung darzustellen.

2. Lastentransportfahrzeug nach Anspruch 1, **dadurch gekennzeichnet, dass** die Raumerfassungssensoranordnung eine bevorzugt bewegliche Kamera umfasst, bevorzugt an der Wechselvorrichtung, besonders bevorzugt an oder in einem beweglichen Element, so dass sich im Rahmen eines Wechsel-, Auflade-, Ablade- und/oder Entladevorgangs der Blickwinkel der Kamera ändert.

3. Lastentransportfahrzeug nach einem der vorhergehenden Ansprüche, **dadurch gekennzeichnet, dass** die Bilderzeugungsvorrichtung ein berührungsempfindliches Display umfasst.

4. Lastentransportfahrzeug nach einem der vorhergehenden Ansprüche, **dadurch gekennzeichnet, dass** die Bilderzeugungsvorrichtung eine Eingabevorrichtung, vorzugsweise ein berührungsempfindliches Display umfasst oder mit einer Eingabevorrichtung signalübertragend verbunden ist, wobei die Kontrolleinrichtung dazu eingerichtet ist, einen Wechsel-, Auflade-, Ablade- und/oder Entladevorgang in Abhängigkeit von mit der Eingabevorrichtung getätigten Eingaben zu starten, zu stoppen und/oder zu variieren.

5. Lastentransportfahrzeug nach Anspruch 4, **dadurch gekennzeichnet, dass** die Eingabevorrichtung mit einem Ausgabebereich der Bilderzeugungsvorrichtung überlappt.

6. Lastentransportfahrzeug nach Anspruch 4 oder 5, **dadurch gekennzeichnet, dass** die Kontrolleinrichtung dazu eingerichtet ist, den Bewegungszustand des Lastentransportfahrzeugs und/oder den Betätigungszustand der Wechselvorrichtung so zu variieren, dass das Entladen und/oder Abladen eines Wechselbehälters auf eine durch Eingaben des Benutzers festgelegte Position erfolgt.

7. Lastentransportfahrzeug nach einem der Ansprüche 4 bis 6, **dadurch gekennzeichnet, dass** die Kontrolleinrichtung dazu eingerichtet ist, einen durch Eingabe des Benutzers bestimmten Behälter anhand der Raumerfassungsinformationen und/oder Bildinformationen zu identifizieren und den Bewegungszustand des Lastentransportfahrzeug und/oder Betätigungszustand der Wechselvorrichtung so zu variieren, dass das Fahrzeug passend zum Aufladen des Wechselbehälters positioniert wird und bevorzugt das Aufladen größtenteils oder vollständig automatisch ausgeführt wird.

8. Lastentransportfahrzeug nach einem der vorhergehenden Ansprüche, **dadurch gekennzeichnet, dass** die Raumerfassungssensoranordnung und/oder die Kontrolleinrichtung einzeln oder zusammen dafür ausgelegt ist/sind, physische Markierungen, Signalfarben, Objekte und/oder Personen zu identifizieren und in Abhängigkeit von der Identifizierung die Darstellung von Bildinformationen noch weiter mit Betriebsanweisungen für einen Wechsel-, Auflade-, Ablade- und/oder Entladevorgang zu überlagern oder zu modifizieren.

9. Lastentransportfahrzeug nach Anspruch 8 in seinem Rückbezug auf Ansprüche 6 und 7, **dadurch gekennzeichnet, dass** die Kontrolleinrichtung dazu eingerichtet ist, die Wechselvorrichtung so zu steuern, dass sie auf Eingabe des Benutzers hin größtenteils oder vollständig automatisch bei einem Wechselbehälterabladevorgang den Wechselbehälter an einer physisch markierten Position ablädt und/oder dass die Kontrolleinrichtung dazu eingerichtet ist, bei einem Wechselbehälteraufladevorgang den anhand der Form und/oder physischen Markierungen identifizierten Wechselbehälter größtenteils oder vollständig automatisch aufzuladen.

10. Lastentransportfahrzeug nach einem der vorhergehenden Ansprüche, **dadurch gekennzeichnet, dass** die Kontrolleinrichtung dazu eingerichtet ist, über gesicherte Funkverbindungen mit einem mobilen Endgerät mit Bilderzeugungsvorrichtung, insbesondere einer Fernsteuerung der Wechselvorrichtung und/oder einem Smartphone zu kommunizieren, so dass sämtliche Funktionen der Bilderzeugungsvorrichtung von dem mobilen Endgerät ausführbar sind.

11. Lastentransportfahrzeug nach einem der vorhergehenden Ansprüche, **dadurch gekennzeichnet, dass** die Bilderzeugungsvorrichtung als mobiles Endgerät ausgebildet ist.

12. Wechselvorrichtung für ein Lastentransportfahrzeug zur Ausbildung eines Lastentransportfahrzeugs mit Wechselvorrichtung zum Wechseln, Auf-, Ab- und/oder Entladen eines Wechselbehälters über das Heck des Lastentransportfahrzeugs, wobei die Wechselvorrichtung mindestens eine Raumerfassungssensoranordnung, die mindestens auf einen Bereich heckseitig des Lastentransportfahrzeugs ausgerichtet ist, mindestens eine Bilderzeugungsvorrichtung, bevorzugt ein Display, zur Ausgabe von Bildinformationen, Ausleger und eine Kontrolleinrichtung umfasst, **dadurch gekennzeichnet, dass** die Kontrolleinrichtung dazu eingerichtet ist, von der Raumerfassungssensoranordnung übertragene Raumerfassungsinformationen mit Informationen eines Wechsel-, Auflade-, Ablade- und/oder Entladevorgangs eines Wechselbehälters zur Darstellung von Bildinformationen mittels der Bilderzeugungsvorrichtung zu kombinieren, wobei die Kontrolleinrichtung ferner dazu eingerichtet ist in den Bildinformationen,
eine Abladeposition des Wechselbehälters als virtuelle Markierung darzustellen.

13. Wechselvorrichtung nach Anspruch 12 umfassend eines oder mehrere Merkmale der Ansprüche 2 bis 11.

14. Verfahren zum Betrieb eines Lastentransportfahrzeugs nach einem der Ansprüche 1 bis 11 oder einer Wechselvorrichtung nach Anspruch 12 oder 13 umfassend die Schritte:
- Erfassung von heckseitigen Raumerfassungsinformationen;
- Kombination der Raumerfassungsinformationen mit Informationen eines Wechsel-, Auflade-, Ablade-, und/oder Entladevorgangs; und
- Darstellung dieser kombinierten Informationen als Bildinformationen, wobei dabei in den Bildinformationen eine Abladeposition des Wechselbehälters als virtuelle Markierung dargestellt wird.

15. Verfahren nach Anspruch 14 ferner umfassend Schritte zur Realisierung von einem oder mehreren der Merkmale der Ansprüche 2 bis 11 oder 13.

## Claims

1. Load transport vehicle comprising a changing device for changing, loading, unloading and/or discharging an interchangeable container over the rear of the load transport vehicle, the load transport vehicle having at least one space detection sensor arrangement which is directed at least onto a region on the rear side of the load transport vehicle, at least one image generating device, preferably a display, for outputting image information, arms, and a control apparatus, **characterised in that** the control apparatus is designed to combine space detection information transmitted by the space detection sensor arrangement with information from a changing, loading, unloading and/or discharging process of an interchangeable container in order to display image information by means of the image generating device, the control apparatus further being designed to display an unloading position of the interchangeable container as a virtual marker in the image information.

2. Load transport vehicle according to claim 1, **characterised in that** the space detection sensor arrangement comprises a preferably movable camera, preferably on the changing device, particularly preferably on or in a movable element, such that the angle of the camera changes in the course of a changing, loading, unloading and/or discharging process.

3. Load transport vehicle according to either of the preceding claims, **characterised in that** the image generating device comprises a touch-sensitive display.

4. Load transport vehicle according to any of the preceding claims, **characterised in that** the image generating device comprises an input device, preferably a touch-sensitive display, or is connected to an input device so as to transmit signals, the control apparatus being designed to start, stop and/or vary a changing, loading, unloading and/or discharging process depending on input made using the input device.

5. Load transport vehicle according to claim 4, **characterised in that** the input device overlaps with an output region of the image generating device.

6. Load transport vehicle according to either claim 4 or claim 5, **characterised in that** the control apparatus is designed to vary the state of motion of the load transport vehicle and/or the operating state of the changing device such that the discharging and/or unloading of an interchangeable container takes place in a position specified by user input.

7. Load transport vehicle according to any of claims 4 to 6, **characterised in that** the control apparatus is designed to identify a container, which is determined by user input, using the space detection information and/or image information, and to vary the state of motion of the load transport vehicle and/or the operating state of the changing device such that the vehicle is suitably positioned for loading the interchangeable container and the loading is preferably carried out largely or completely automatically.

8. Load transport vehicle according to any of the preceding claims, **characterised in that** the space detection sensor arrangement and/or the control apparatus is/are designed individually or together to identify physical markings, signal colours, objects and/or people and, depending on the identification, to further overlay or modify the display of image information with operating instructions for a changing, loading, unloading and/or discharging process.

9. Load transport vehicle according to claim 8 when dependent on claims 6 and 7, **characterised in that** the control apparatus is designed to control the changing device such that said changing device, upon user input, largely or completely automatically unloads the interchangeable container at a physically marked position during an interchangeable container unloading process, and/or **in that** the control apparatus is designed to largely or completely automatically load the interchangeable container, which is identified using the shape and/or physical markings, during an interchangeable container loading process.

10. Load transport vehicle according to any of the preceding claims, **characterised in that** the control apparatus is designed to communicate via secured radio connections with a mobile terminal having an image generating device, in particular with a remote control of the changing device and/or with a smartphone, such that all of the functions of the image generating device can be carried out by the mobile terminal.

11. Load transport vehicle according to any of the preceding claims, **characterised in that** the image generating device is designed as a mobile terminal.

12. Changing device for a load transport vehicle for forming a load transport vehicle comprising a changing device for changing, loading, unloading and/or discharging an interchangeable container over the rear of the load transport vehicle, the changing device having at least one space detection sensor arrangement which is directed at least onto a region on the rear side of the load transport vehicle, at least one image generating device, preferably a display, for outputting image information, arms, and a control apparatus, **characterised in that** the control apparatus is designed to combine space detection information transmitted by the space detection sensor arrangement with information from a changing, loading, unloading and/or discharging process of an interchangeable container in order to display image information by means of the image generating device, the control apparatus further being designed to display an unloading position of the interchangeable container as a virtual marker in the image information.

13. Changing device according to claim 12, comprising one or more features of claims 2 to 11.

14. Method for operating a load transport vehicle according to any of claims 1 to 11 or a changing device according to either claim 12 or claim 13, comprising the steps of:
- detecting rear-side space detection information;
- combining the space detection information with information from a changing, loading, unloading and/or discharging process; and
- displaying this combined information as image information, wherein, in said image information, an unloading position of the interchangeable container is displayed as a virtual marker.

15. Method according to claim 14, further comprising steps for implementing one or more of the features of claims 2 to 11 or 13.

## Revendications

1. Véhicule de transport de charges avec un dispositif de remplacement pour remplacer, charger, décharger et/ou évacuer un conteneur interchangeable par l'arrière du véhicule de transport de charges, dans lequel le véhicule de transport de charges comprend au moins un ensemble capteur de détection d'espace, qui est orienté au moins sur une zone côté arrière du véhicule de transport de charges, au moins un dispositif de production d'images, de manière préférée un écran, pour sortir des informations d'image, des potences et un système de contrôle, **caractérisé en ce que** le système de contrôle est configuré pour combiner des informations de détection d'espace transmises par l'ensemble capteur de détection d'espace à des informations d'une opération de remplacement, de chargement, de déchargement et/ou d'évacuation d'un conteneur interchangeable pour représenter des informations d'image au moyen du dispositif de production d'images, dans lequel le système de contrôle est en outre configuré pour représenter en tant que repère virtuel dans les informations d'image, une position de déchargement du conteneur interchangeable.

2. Véhicule de transport de charges selon la revendication 1, **caractérisé en ce que** l'ensemble capteur de détection d'espace comprend une caméra de manière préférée mobile, de manière préférée au niveau du dispositif de remplacement, de manière particulièrement préférée au niveau de ou dans un élément mobile de sorte que l'angle de vue de la caméra varie dans le cadre d'une opération de remplacement, de chargement, de déchargement et/ou d'évacuation.

3. Véhicule de transport de charges selon l'une quelconque des revendications précédentes, **caractérisé en ce que** le dispositif de production d'images comprend un écran tactile.

4. Véhicule de transport de charges selon l'une quelconque des revendications précédentes, **caractérisé en ce que** le dispositif de production d'images comprend un dispositif d'entrée, de préférence un écran tactile ou est relié avec transmission de signaux à un dispositif d'entrée, dans lequel le système de contrôle est mis au point pour démarrer, arrêter et/ou faire varier une opération de remplacement, de chargement, de déchargement et/ou d'évacuation en fonction d'entrées effectuées avec le dispositif d'entrée.

5. Véhicule de transport de charges selon la revendication 4, **caractérisé en ce que** le dispositif d'entrée se superpose avec une zone de sortie du dispositif de production d'images.

6. Véhicule de transport de charges selon la revendication 4 ou 5, **caractérisé en ce que** le système de contrôle est configuré pour faire varier l'état de déplacement du véhicule de transport de charges et/ou l'état d'actionnement du dispositif de remplacement de telle sorte que l'évacuation et/ou le déchargement d'un conteneur interchangeable sont réalisés sur une position fixée par des entrées de l'utilisateur.

7. Véhicule de transport de charges selon l'une quelconque des revendications 4 à 6, **caractérisé en ce que** le système de contrôle est configuré pour identifier un conteneur défini par une entrée de l'utilisateur à l'aide des informations de détection d'espace et/ou des informations d'image et pour faire varier l'état de déplacement du véhicule de transport de charges et/ou l'état d'actionnement du dispositif de remplacement de telle sorte que le véhicule est positionné de manière adaptée pour charger le conteneur interchangeable et de manière préférée le chargement est exécuté en grande partie ou en totalité automatiquement.

8. Véhicule de transport de charges selon l'une quelconque des revendications précédentes, **caractérisé en ce que** l'ensemble capteur de détection d'espace et/ou le système de contrôle est/sont configuré(s) individuellement ou conjointement pour identifier des repères physiques, des couleurs de signalisation, des objets et/ou des personnes et pour, en fonction de l'identification, superposer la représentation d'informations d'image encore davantage à des instructions de fonctionnement pour une opération de remplacement, de chargement, de déchargement et/ou d'évacuation ou pour les modifier.

9. Véhicule de transport de charges selon la revendication 8 en lien avec les revendications 6 et 7, **caractérisé en ce que** le système de contrôle est configuré pour commander le dispositif de remplacement de telle sorte qu'il décharge en grande partie ou totalement automatiquement lors d'une opération de déchargement de conteneur interchangeable le conteneur interchangeable au niveau d'une position repérée physiquement à la suite d'une entrée de l'utilisateur, et/ou que le système de contrôle est configuré pour charger en grande partie ou totalement automatiquement lors d'une opération de chargement de conteneur interchangeable le conteneur interchangeable identifié à l'aide de la forme et/ou de repères physiques.

10. Véhicule de transport de charges selon l'une quelconque des revendications précédentes, **caractérisé en ce que** le système de contrôle est configuré pour communiquer par l'intermédiaire de liaisons radio sécurisées avec un terminal mobile avec un dispositif de production d'images, en particulier avec une commande à distance du dispositif de remplacement et/ou un téléphone intelligent de sorte que toutes les fonctions du dispositif de production d'images peuvent être exécutées par le terminal mobile.

11. Véhicule de transport de charges selon l'une quelconque des revendications précédentes, **caractérisé en ce que** le dispositif de production d'images est réalisé en tant que terminal mobile.

12. Dispositif de remplacement pour un véhicule de transport de charges pour réaliser un véhicule de transport de charges avec un dispositif de remplacement pour remplacer, charger, décharger et/ou évacuer un conteneur interchangeable par l'arrière du véhicule de transport de charges, dans lequel le dispositif de remplacement comprend au moins un ensemble capteur de détection d'espace, qui est dirigé au moins sur une zone côté arrière du véhicule de transport de charges, au moins un dispositif de production d'images, de manière préférée un écran, pour sortir des informations d'images, des potences et un système de contrôle, **caractérisé en ce que** le système de contrôle est configuré pour combiner des informations de détection d'espace transmises par l'ensemble capteur de détection d'espace à des informations d'une opération de remplacement, de chargement, de déchargement et/ou d'évacuation d'un conteneur interchangeable pour représenter des informations d'image au moyen du dispositif de production d'images, dans lequel le système de contrôle est en outre configuré pour représenter en tant que repère virtuel dans les informations d'image une position de déchargement du conteneur interchangeable.

13. Dispositif de remplacement selon la revendication 12, comprenant une ou plusieurs caractéristiques selon les revendications 2 à 11.

14. Procédé pour faire fonctionner un véhicule de transport de charges selon l'une quelconque des revendications 1 à 11 ou un dispositif de remplacement selon la revendication 12 ou 13, comprenant les étapes :
- de détection d'informations de détection d'espace côté arrière ;
- de combinaison des informations de détection d'espace à des informations d'une opération de remplacement, de chargement, de déchargement et/ou d'évacuation ; et
- de représentation desdites informations combinées en tant qu'informations d'image, dans lequel une position de déchargement du conteneur interchangeable est représentée dans les informations d'image en tant que repère virtuel.

15. Procédé selon la revendication 14, comprenant en outre des étapes de réalisation d'une ou de plusieurs des caractéristiques des revendications 2 à 11 ou 13.
